# EUROPEAN PATENT APPLICATION

(11) **EP 2 270 369 A1**
(43) Date of publication of application: **05.01.2011**
(21) Application number: 09008583.8
(22) Date of filing: 30.06.2009
(51) Int. Cl.: F16K 1/44, F01D 17/14

(54) **Valve device and a steam turbine system incorporating said valve device**

(71) Applicant: SIEMENS AKTIENGESELLSCHAFT, 80333 München (DE)
(72) Inventor: Batwal, Yashwant, 122001 Gurgaon (IN); De, Nihar Ranjan, 110019 New Delhi Dehli (IN); Mittal, Prince, Shahdara 110094 New Dehli (IN)

(57) **Abstract**

The present invention provides a valve device incorporating two valves, for example a stop valve and a control valve, housed in the same side of a common casing. The proposed valve device (10) comprises an inlet port (14) and an outlet port (16) connected by a fluid flow channel (18). The valve device (10) further includes a first valve and a second valve housed in a common casing (13). The first valve comprises a first valve head (22) mounted on an annular-shaped first spindle (20). The second valve comprises a second valve head (26) mounted on a second spindle (24), said second spindle (24) extending concentrically and slidably through said annular-shaped first spindle (20). The first and second valves are displaceable along a common axis (28) and operable to influence fluid flow between said inlet port (14) and said outlet port (16) through said flow channel (18).

## Description

The present invention relates to valve devices, and in particular to a valve device including a stop valve and a control valve used, for example, in steam power generation systems.

In a steam power generation system, a valve device is used, for example between a steam generator and a turbine to control the flow of steam to the turbine. Such a valve device typically includes two valves, namely a control valve and a stop valve. The control valve, also known as a governor valve, controls the quantity of steam flowing through the turbine, which, in turn controls the rotation speed or load of the steam turbine. The stop valve is a fast-closing valve which acts in an emergency, such as during control errors or some other, outer fault, to stop steam flow to the turbine completely, to prevent damage to the turbine. The stop and control valves are controlled independently of each other, that is, the stop valve must be able to close independently of the position of the control valve. Typically, each of the stop valve and the control valve includes a valve head, mounted on a respective spindle that can be advanced into an operating position partially or wholly blocking a fluid conduit.

Traditionally, the stop and control valves have been arranged in respective valve casings/housings in a steam flow channel, the stop valve being arranged upstream of the control valve. Herein, the respective valve housings of the stop valve and the control valve each form a perpendicular bend of the steam flow channel, which causes the steam flow to be redirected twice by 90 degrees. This double redirection of the steam flow leads to an important drop of pressure resulting in flow losses. Moreover, since the structure requires two valve housings, such a contraction is costly and further occupies a lot of space around the turbine.

More recently, valve assemblies incorporating both stop valves and control valves in one casing have been developed. This arrangement has been made possible, for example, by having one concentric spindle for the stop valve and multiple eccentric spindles for the control valve. However, such an arrangement having one concentric spindle and multiple eccentric spindles leads to difficulty in the machining process and further and may result in malfunctioning by sticking of valve spindle due to forces on the sidewall.

The object of the present invention is to overcome the aforementioned disadvantages of the prior art and provide an improved arrangement for a valve device incorporating both stop valves and control valves in one common casing.

The above object has been achieved by a valve device according to claim 1.

The underlying idea of the present invention is to provide a first spindle with annular hole accommodating a second spindle within, to allow concentric movement of two valves, for example a stop and a control valve, that are arranged in the same side of a common casing. Providing concentric hole is easy from manufacturing point of view in comparison to having one concentric spindle and multiple eccentric spindles as the latter presents difficulty in the machining process and may result in malfunctioning by sticking of valve spindle.

In one embodiment, the valve device further comprises a first bushing disposed concentrically and sealingly between said annular-shaped first spindle and said second spindle. The bushing serves to guide the sliding of the first spindle against the second spindle and also prevents leakage of the fluid between the two spindles.

In an exemplary embodiment, each of said first and second valve heads comprise a respective first portion disposed along a plane perpendicular to said axis and a respective second portion disposed along a plane parallel to said axis, said valve device further comprising:
- a first spacing defined between said first portion of said second valve head and said second spindle, and
- a valve cover concentrically disposed around said first spindle, said valve cover having a first portion defining a second spacing between said first portion of the valve cover and said first portion of said first valve head, said valve cover further comprising one or more openings allowing fluid communication between second spacing and said fluid flow channel, wherein the projected area of said second spacing perpendicular to said axis is greater than the projected area of said first spacing perpendicular to said axis.

The first spacing accommodates substantially independent operation of the two valves. The difference in the projected areas of the first and second spacings ensures a positive steam pressure along the axis toward the direction of closing of the first valve, which reduces the actuating force required for opening the first valve when the steam is allowed to move to the first spacing via the first portion of the first valve head. This embodiment is particularly advantageous if the first valve is a stop valve.

In a preferred embodiment, said second portions of said first and second valve heads each comprise hollow cone-shaped bodies. Further, in an advantageous construction, to minimize space requirement, the valve device comprises a common valve seat configured for resting thereupon said first and second valve heads in a closed position of the respective valve.

In a further embodiment, to prevent leakage of fluid from said spacing, the valve device further comprises a second bushing disposed concentrically and sealingly between a second portion of said valve cover and said first spindle.

In a contemplated embodiment, said fluid flow channel is configured and arranged to turn the fluid by an angle greater than 90 degrees between the inlet port and the outlet port. This prevents abrupt changes in the direction of fluid flow by providing a gradual deflection to the fluid flow channel, thereby minimizing pressure losses.

In an advantageous embodiment, the valve device further comprises an annular-shaped first actuator and a second actuator extending through said annular shaped first actuator, said first and second actuators being respectively coupled to first and second spindles and adapted to respectively actuate displacements of said first and second spindles. This arrangement minimizes actuator overhang and thus reduces vibration of the actuators, while also providing a compact design.

In another aspect of the present invention, a system is provided that comprises a valve device according to the aforementioned embodiments, the system further comprising a controller adapted to monitor conditions external and/or internal to said valve device, and to control the position of the first and second valves based upon said conditions.

In yet another aspect of the present invention, a steam turbine system is provided comprising steam generator, a steam turbine, and a fluid flow channel for transferring steam from the steam generator to the steam turbine, wherein said steam turbine system includes a valve device according to the aforementioned embodiments, said valve device being adapted to influence flow of steam through said fluid flow channel.

The present invention is further described hereinafter with reference to illustrated embodiments shown in the accompanying drawings, in which:
FIG 1 is a sectional view of a valve device according to one embodiment of the present invention,
FIG 2 is a sectional view of a valve device according to another embodiment of the present invention, and
FIG 3 is a schematic diagram of a steam turbine system according one aspect of the present invention.

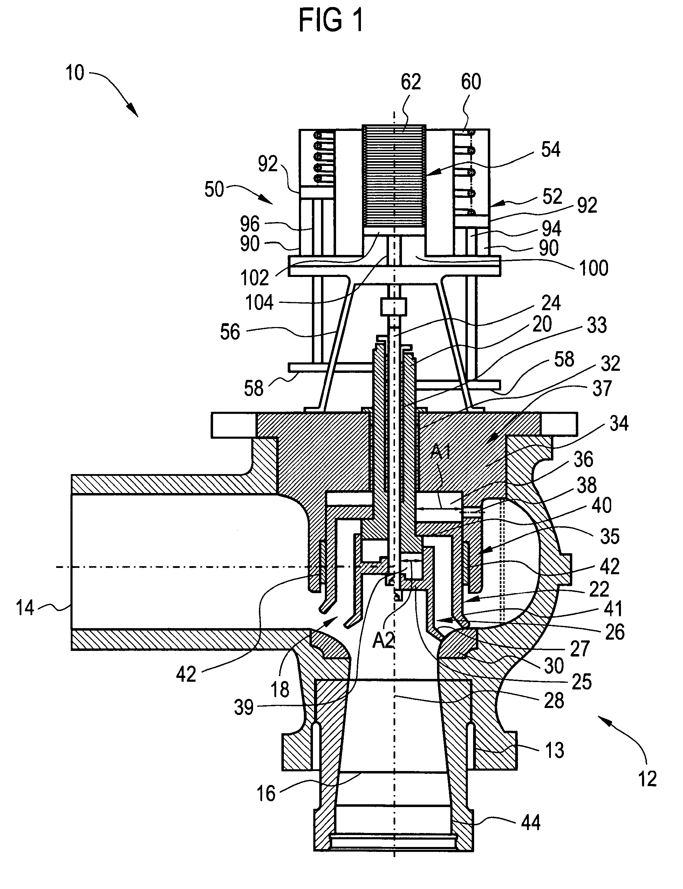

Referring now to the drawings, wherein like characters designate like or corresponding parts, there is shown in FIG 1 a valve device 10 according one embodiment of the present invention. It should be noted that in the depiction in FIG 1, the portion of the valve device 10 to the right of the axis 28 represents a closed position and the portion to the left of the axis 28 represents an open position. This is only for illustrative purposes. In reality, the valve device 10, more particularly the valve heads, valve spindles and the actuators are substantially symmetrical about the axis 28. The valve device 10 may be broadly considered to include a valve portion 12 and an actuator portion 50. The valve portion 12 includes a fluid inlet port 14 and a fluid outlet port 16, connected by a fluid flow channel 18. In this example, the valve device 10 is for use in steam turbine system, the inlet port 14 is typically connected to a steam channel from a steam generator (not shown in FIG 1), while the outlet port 16 leads to a steam turbine (not shown in FIG 1) via a diffuser 44. A casing 13 forms a pressure vessel for the fluid flowing through the flow channel 18. The flow of steam through the channel 18 is influenced by a pair of valves, for example a stop valve and a control valve, housed in the casing 13.

In the illustrated embodiment, the stop valve includes a stop valve head 22 mounted on a first annular-shaped or hollow spindle 20. The stop valve is a fast-closing valve operable to act in an emergency to completely stop steam flow through the channel 18 to the outer port 16. For example, in a steam turbine system, a stop valve may in the event of a control error or some other, outer fault, to stop steam flow to the turbine completely. Accordingly, the spindle 20 operates to displace the stop valve head 22 along a central valve axis 28 essentially between two positions, namely, a completely open position, represented by the position of the valve device to the left of the axis 28, and a closed position represented on the right of the axis 28. As shown, in the open or retracted position, the outlet port 16 is in fluid communication with the inlet port 14, while in the closed position, the stop valve head 22 rests on an annular valve seat 30, isolating the outlet port 16 from the inlet port 14.

The control valve includes a control valve head 26 mounted on a second spindle 24. The spindle 24 of the control valve extends concentrically and slidably through the hollow spindle 20 of the stop valve. The spindle 24 operates to displace the control valve head 26 towards and away from the valve seat 30, which is common to both the stop valve and the control valve. The control valve thus functions as a governor for controlling the quantity fluid (or flow rate of the fluid) flowing through the flow channel 18.

The above-described design allows concentric movement of the stop and control valves that are arranged in the same side of a common casing. Advantageously, providing concentric hole to one of the spindles (the stop valve spindle, in this example) is easy from manufacturing point of view in comparison to having one concentric spindle and multiple eccentric spindles as the latter presents difficulty in the machining process and may result in malfunctioning by sticking of valve spindle.

In the illustrated embodiment, the valve head 22 has an L-shaped cross-sectional view, comprising a first portion 40 (also known as a pre-stroke portion) disposed along a plane perpendicular the axis 28 and a second portion 41 disposed along a plane parallel to the axis 28. Likewise, the valve head 26 has a first portion 25 disposed along a plane perpendicular the axis 28 and a second portion 27 disposed along a plane parallel to the axis 28. The first portion 25 of the valve head 26 and the spindle 24 define a first spacing 39. The spacing 39 accommodates substantially independent operation of the first and second valves. The portions 41 and 27 of the valve heads 22 and 26 respectively comprise hollow conical bodies.

To guide the movement of the spindle 24 against the hollow spindle 20, a bushing 33 is disposed concentrically between the two spindles 20 and 24. The bushing 33 additionally prevents leakage of steam between the two valve spindles. A valve cover 34 annularly surrounds the hollow spindle 20. The valve cover 34 has a first portion 35 defining a second spacing 36 between it and the pre-stroke portion 40 of the valve head 22. This spacing 36 is fluidically connected to the flow channel 18 via one or more openings 38 on the valve cover 34 which allow steam to fill up the spacing 36. The projected area A1 of the spacing 36 perpendicular to the axis 28 is greater than the projected area A2 of the spacing 39 perpendicular to the axis 28. This ensures a positive steam pressure along the axis 28 toward the direction of closing of the stop valve, which reduces the actuating force required for opening the stop valve when the steam is allowed to move to the spacing 39 via the pre-stroke portion 40. The stop valve spindle 20 is slidable against a second portion 37 of the valve cover 34. To guide the movement of the spindle 20, bushings 32 may be disposed between the spindle 20 and portion 37 of the valve cover 34, which also serves to provide a seal against leakage of steam from the spacing 36. In the illustrated embodiment, a guide bush 42 is further provided between the portion 35 of the valve cover 34 and the valve head 22 that slides against it.

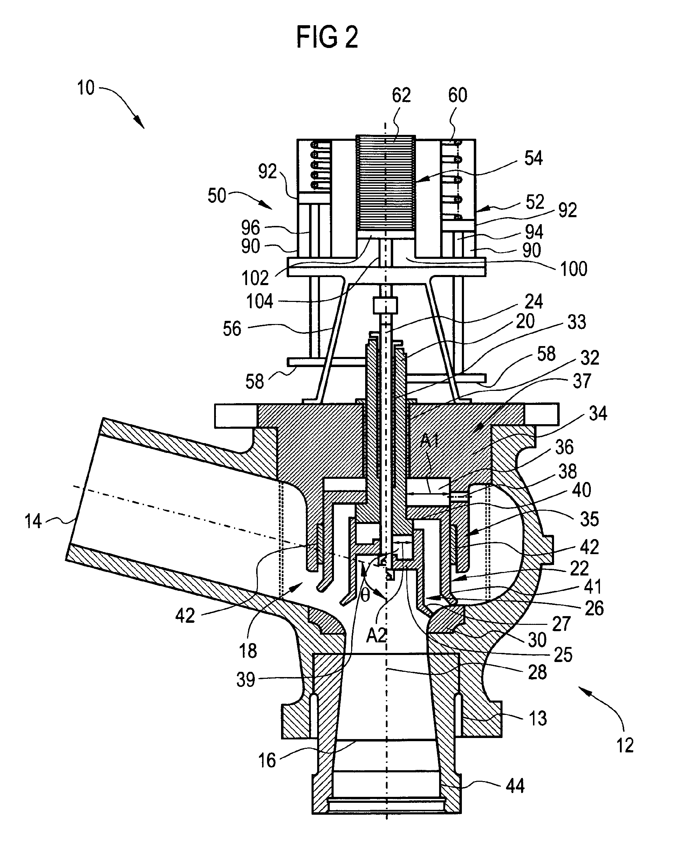

In the illustrated embodiment, the fluid flow channel 18 redirects the fluid (for e.g. steam) by an angle of 90 degrees as is also true for conventional designs. However, in a preferred embodiment, illustrated in FIG 2, the fluid flow channel 18 is configured and arranged to turn the fluid by an angle θ greater than 90 degrees between the inlet port 14 and the outlet port 16. Advantageously, this embodiment prevents abrupt changes in the direction of fluid flow by providing a gradual deflection to the fluid flow channel, thereby minimizing important pressure flow losses. Further, it should be noted that in the illustrated embodiments, the outer valve including the hollow spindle 20 and the valve head 22 is configured to be actuated as the stop valve, while the inner valve including the spindle 24 and the valve head 26 is configured to be actuated as the control valve. This is advantageous, since the inner valve head, being lesser in diameter than the outer valve head, provides greater control in adjusting fluid flow rate through the channel 18. However, it would be also possible to configure and operate the outer valve as the control valve and the inner valve as the stop valve.

The actuator portion 50 in the exemplary embodiment includes actuators 52 and 54 co-axial with the spindles 20 and 24, for actuating the displacements of the stop valve and control valve respectively. The stop valve actuator 52 is annular-shaped, while the actuator 54 concentrically extends through the actuator 52. The actuator 52 includes an annular-shaped cylindrical hydraulic chamber 90 within which is disposed an annular actuator head 92. Upon the actuator head 92 are mounted one or more eccentrically disposed actuator stems 94, 96 that control the displacement of the annular-shaped spindle 20. The actuator stems 94 and 96 are coupled to the annular spindle 20 by a coupling member 58. The actuator 54 includes a cylindrical hydraulic chamber 100 within which is disposed an actuator head 102. Upon the actuator head 102 is mounted an actuator stem 104 that is co-axially coupled to the spindle 24 and controls the displacement of the spindle 24. The actuators 52 and 54 further comprise biasing members 60, 62 disposed against respective actuator heads 92, 102 and biased against the pressure of the hydraulic fluid inside the chambers 90 and 100 respectively. In this example, the biasing member 60 in the annular actuator 52 comprises helical springs while the biasing member 62 in the central actuator 54 comprises disc springs. Disc springs provide high compressive force. On the other hand, helical springs have a large unutilized central spacing and are hence suitable to be disposed in the annular-shaped chamber 90. The above arrangement minimizes actuator overhang and thus reduces vibration of the actuators, while also providing a compact design, wherein the entire actuator assembly may be supported with the single yoke 56. However, actuators having or conventional or known designs (for example, multiple overhanging actuators) may also be used.

In operation, the actuators 52 and 54 are generally controlled by a controller based on internal and/or external factors monitored by the controller. To that end, hydraulic chambers 90 and 100 are controllable by respective servo valves (not shown) which convert electrical signals from the controller into hydraulic signals that dump or withdraw fluid from the hydraulic chambers, causing displacement of the actuators. The biasing means 60 and 62 are employed to close the respective valves when the hydraulic fluid is dumped from the respective cylinders upon receiving a signal from the controller via the servo valves.

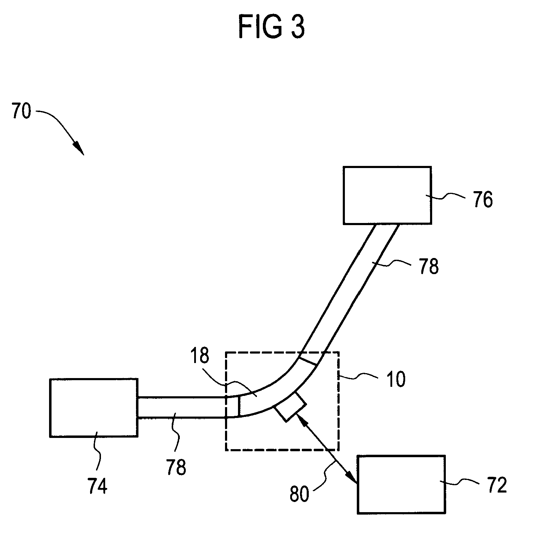

FIG 3 illustrates a steam power system 70 incorporating a valve device 10 according to the present invention. The valve device 10 is arranged such that the flow channel 18 is part of a flow channel 78 between a steam generator 74 and a steam turbine 76. The stop and control valves are controlled by a controller 72, which monitors factors such as the speed or load of the turbine 76, to ascertain what changes should be made to improve the running of the power system 70. The controller 72 controls the valve device 10 via a wired or wireless communication link 80.

During operation of the system 70, the steam generator 74 heats water to generate steam which passes from the steam generator 74 into the channel 18 of the valve device 10. The channel 18 is normally open (i.e., the inlet port is in communication with the outlet port), with the stop valve head 22 fully retracted and the control valve head 26 is positioned to regulate the pressure of the steam and, therefore, the speed of the turbine 76. The controller 72 monitors the condition of the system 70 and regulates the control valve head 26 accordingly by displacing the control valve spindle 24 using the control valve actuator 54.

If operational conditions require that steam flow through channel 78 should be prevented (which may be due to an emergency but may equally be part of the normal operation of the system 70), the controller 72 controls the stop valve actuator 52 via the communication link 80 to urge the stop valve forward to its closed position, in which the channel 18 is sealed.

Summarizing, the present invention provides a valve device incorporating stop and control valves son the same side of a common casing. The proposed valve device comprises an inlet port and an outlet port connected by a fluid flow channel. The valve device further includes a first valve and a second valve housed in a common casing. The first valve comprises a first valve head mounted on an annular-shaped first spindle. The second valve comprises a second valve head mounted on a second spindle, said second spindle extending concentrically and slidably through said annular-shaped first spindle. The first and second valves are operable to influence fluid flow between said inlet port and said outlet port through said flow channel.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the spirit or scope of the present invention as defined by the below-mentioned patent claims.

## Claims

1. A valve device (10), comprising:
- an inlet port (14) and an outlet port (16) connected by a fluid flow channel (18), and
- first and second valves housed in a common casing (13), said first valve comprising a first valve head (22) mounted on an annular-shaped first spindle (20), said second valve comprising a second valve head (26) mounted on a second spindle (24), said second spindle (24) extending concentrically and slidably through said annular-shaped first spindle (20), said first and second valves displaceable along a common axis (28) and operable to influence fluid flow between said inlet port (14) and said outlet port (16) through said flow channel(18).

2. The valve device (10) according to claim 1, wherein one of said first and second valves is configured as a stop valve and the other valve is configured as a control valve, wherein the spindle (20) of said configured stop valve is operable to displace the valve head (22) of said stop valve between a closed position isolating said inlet port (14) from said outlet port (16), and an open position allowing fluid communication between said inlet port (14) and said outlet port (16), and wherein the spindle (24) of said configured control valve is operable to displace the valve head (26) of said control valve for flow control of fluid passing along said fluid flow channel (18).

3. The valve device (10) according to any of the preceding claims, further comprising a first bushing (33) disposed concentrically and sealingly between said annular-shaped first spindle (20) and said second spindle (24).

4. The valve device (10) according to any of the preceding claims, wherein each of said first and second valve heads (22) comprise a respective first portion (40, 25) disposed along a plane perpendicular to said axis (28) and a respective second portion (41, 27) disposed along a plane parallel to said axis (28), said valve device (10) further comprising:
- a first spacing (39) defined between said first portion (25) of said second valve head (26) and said second spindle (24), and
- a valve cover (34) concentrically disposed around said first spindle (20), said valve cover (34) having a first portion (35) defining a second spacing (36) between said first portion (35) of the valve cover (34) and said first portion (40) of said first valve head (22), said valve cover (34) further comprising one or more openings (38) allowing fluid communication between second spacing (36) and said fluid flow channel (18),
wherein the projected area (A1) of said second spacing (36) perpendicular to said axis (28) is greater than the projected area (A2) of said first spacing (39) perpendicular to said axis (28).

5. The valve device (10) according to claim 4, wherein said second portions (41, 27) of said first and second valve heads (22, 26) comprise hollow cone-shaped bodies.

6. The valve device (10) according to any of claims 4 and 5, further comprising a second bushing (32) disposed concentrically and sealingly between a second portion (37) of said valve cover (34) and said first spindle (20).

7. The valve device (10) according to any of the preceding claims, comprising a common valve seat (30) configured for resting thereupon said first and second valve heads (22, 26) in a closed position of the respective valve.

8. The valve device (10) according to any of the preceding claims, wherein said fluid flow channel (18) is configured and arranged to turn the fluid by an angle (θ) greater than 90 degrees between the inlet port (14) and the outlet port (16).

9. The valve device (10) according to any of the preceding claims, further comprising an annular-shaped first actuator (52) and a second actuator (54) extending through said annular shaped first actuator (52), said first and second actuators (52, 54) being respectively coupled to first and second spindles (20, 24) and adapted to respectively actuate displacements of said first and second spindles (20, 24).

10. A system (70) comprising a valve device (10) according to any of the preceding claims and further comprising a controller (72) adapted to monitor conditions external and/or internal to said valve device (10), and to control the position of the first and second valves based upon said conditions.

11. A steam turbine system (70) comprising steam generator (74), a steam turbine (76), and a channel (78) for transferring steam from the steam generator (74) to the steam turbine (76), wherein said steam turbine system (70) includes a valve device (10) according to any of claims 1 to 9, said valve device (10) being adapted to influence flow of steam through said channel (78).
